# FASCICULE DE BREVET EUROPEEN

(11) **EP 2 682 833 B1**
(45) Date de publication et mention de la délivrance du brevet: **19.10.2016**
(21) Numéro de dépôt: 13171664.9
(22) Date de dépôt: 12.06.2013
(51) Int. Cl.: G05B 19/418, B65G 1/137

(54) **Dispositif autonome employé dans un système d'aide à l'assemblage d'un produit**
Autonome Vorrichtung, die in einem Hilfssystem für den Zusammenbau eines Produkts verwendet wird
Autonomous device employed in a system for facilitating the assembly of a product

(30) Priorité: 05.07.2012 FR 1256446
(43) Date de publication de la demande: 08.01.2014
(73) Titulaire: Schneider Electric Industries SAS, 92500 Rueil-Malmaison (FR)
(72) Inventeur: De Martin, Lino, 76780 CROISY SUR ANDELLE (FR)
(74) Mandataire: Dufresne, Thierry

(56) Documents cités:
- DE-U1-202011 106 404
- JP-A- 2007 148 995
- US-A1- 2005 113 949

## Description

### Domaine technique de l'invention

La présente invention se rapporte à un dispositif autonome employé dans un système d'aide à l'assemblage d'un produit. L'invention concerne également le système d'aide à l'assemblage d'un produit comportant plusieurs dispositifs conformes à l'invention.

### Etat de la technique

Il existe des systèmes permettant d'aider un opérateur à assembler un produit dans un processus de fabrication. Ces systèmes sont conçus pour signaler à l'opérateur la prochaine pièce à saisir dans le processus d'assemblage du produit. Ces systèmes comportent des organes de signalisation placés à proximité de chaque bac de stockage pour signaler à l'opérateur dans quel bac de stockage se situe la prochaine pièce à assembler, des capteurs de présence positionnés sur chaque bac de stockage, et un séquenceur pour dérouler la séquence d'assemblage du produit. Le séquenceur est agencé pour envoyer un premier signal de commande à un organe de signalisation placé à proximité du bac de stockage dans lequel doit être saisie la première pièce. Il reçoit ensuite un signal de détection en provenance du capteur de présence positionné sur ce bac de stockage, indiquant que l'opérateur a saisi la pièce, puis passe à l'étape suivante d'assemblage en envoyant un deuxième signal de commande à un organe de signalisation associé au bac de stockage dans lequel doit être saisie la pièce suivante. Le séquenceur déroule une séquence d'assemblage mémorisée jusqu'à ce que le produit soit entièrement assemblé. Pour chaque bac de stockage de pièces, un organe de signalisation et un capteur de présence sont employés. Ceux-ci sont tous raccordés au séquenceur qui centralise leur commande en suivant la séquence d'assemblage. De telles solutions sont décrites dans les documents DE202011106404U1, JP2007148995A ou US2005/113949A1.

Ces agencements connus présentent certains inconvénients, parmi lesquels :
- La nécessité d'une infrastructure lourde en termes de câblage ou de dimensionnement des appareils employés, même si le produit à assembler comporte peu de pièces.
- Le manque de souplesse en cas de changement de processus de fabrication. Tout le câblage doit alors être refait et la séquence doit être entièrement reprogrammée.

Le but de l'invention est de proposer un dispositif employé dans un système d'aide à l'assemblage d'un produit, qui soit fiable, qui ne nécessite qu'un câblage limité et qui soit facile à programmer pour permettre une adaptation rapide à tout nouveau processus de fabrication.

### Exposé de l'invention

Ce but est atteint par un dispositif selon la revendication 1.

Selon une particularité, le dispositif comporte un boîtier logeant le capteur de présence, ledit au moins un organe de signalisation, l'interface de communication et le séquenceur.

Selon une autre particularité, le dispositif comporte des moyens de détection d'un passage en phase d'apprentissage. Les moyens de détection comportent par exemple un détecteur de polarité connecté au séquenceur. Le détecteur de polarité est par exemple logé dans le boîtier.

Selon une autre particularité, le dispositif comporte un module d'alimentation électrique. Le module d'alimentation électrique est par exemple logé dans le boîtier.

Selon une autre particularité, le séquenceur comporte un microcontrôleur.

Selon une autre particularité, le dispositif comporte un deuxième organe de signalisation apte à signaler les erreurs de saisie.

Selon une autre particularité, le deuxième organe de signalisation est logé dans le boîtier.

L'invention concerne également un système d'aide à l'assemblage d'un produit selon la revendication 10.

Selon une particularité, le système comporte une source d'alimentation et deux lignes d'alimentation connectées à ladite source d'alimentation, le premier dispositif et le deuxième dispositif étant connectés aux deux lignes d'alimentation.

Selon une autre particularité, la ligne de communication est réalisée sur une ligne d'alimentation.

Selon une autre particularité, le système comporte un sélecteur permettant de sélectionner une séquence d'assemblage parmi plusieurs séquences d'assemblage mémorisées dans le premier dispositif et le deuxième dispositif.

Selon une autre particularité, le système comporte un deuxième organe de signalisation apte à signaler les erreurs de saisie, ce deuxième organe de signalisation étant connecté à la ligne de communication.

### Brève description des figures

D'autres caractéristiques et avantages vont apparaître dans la description détaillée qui suit faite en regard des dessins annexés dans lesquels :
- la figure 1 représente un système d'aide à l'assemblage d'un produit, tel qu'il est connu dans l'état de la technique,
- la figure 2 représente un système d'aide à l'assemblage d'un produit conforme à l'invention,
- la figure 3 représente de manière schématique le dispositif autonome employé dans le système de l'invention,
- la figure 4 illustre un perfectionnement du système de l'invention.

### Description détaillée d'au moins un mode de réalisation

Dans la suite de la description, les différents modules décrits ci-dessous peuvent être réalisés par des moyens logiciels, par des moyens électroniques ou par la combinaison de moyens logiciels et électroniques.

L'invention concerne un système d'aide à l'assemblage d'un produit. Sur les chaînes d'assemblage manuel d'un produit, un opérateur est amené à saisir des pièces et/ou à exécuter des tâches destinées à l'assemblage du produit. Pour l'aider dans sa tâche, des systèmes d'aide à l'assemblage du produit ont été introduits. Un tel système déroule la séquence d'assemblage et indique, à chaque étape d'assemblage, la pièce dont l'opérateur doit se saisir ou la tâche à exécuter. Dans la suite de la description, nous prenons l'exemple de l'assemblage d'un produit à l'aide de différentes pièces réparties dans sept bacs de stockage B1-B7 distincts.

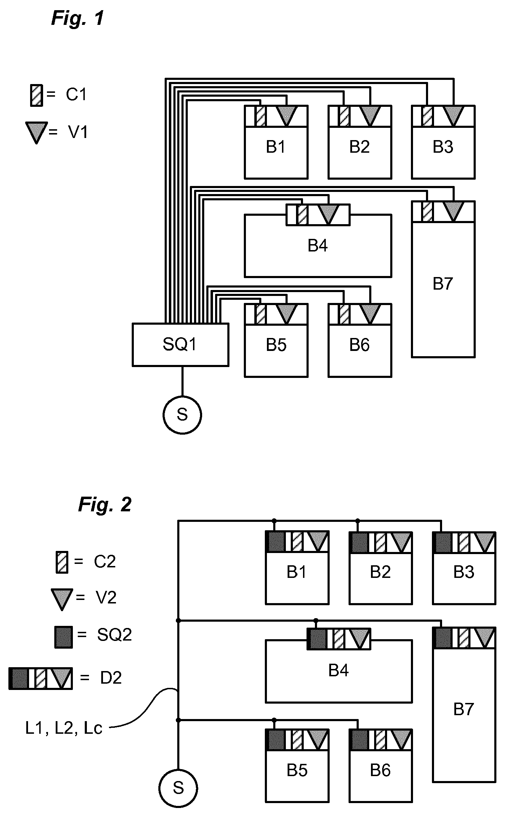

Pour cela, comme représenté sur la figure 1, un système connu dans l'état de la technique comporte :
- un séquenceur SQ1 chargé de dérouler la séquence d'assemblage,
- pour chaque bac de stockage (B1-B7) de pièces, un ensemble formé d'un organe de signalisation V1 et d'un capteur de présence C1.

Lors d'une étape d'assemblage du produit, le séquenceur envoie un ordre à l'organe de signalisation V1 situé à proximité du bac de stockage où est stockée la pièce à assembler. Lorsque la pièce est saisie dans ledit bac de stockage, le capteur de présence C1 détecte la présence de la main de l'opérateur et envoie un signal de détection au séquenceur SQ1 qui peut alors passer à l'étape suivante.

Comme déjà décrit ci-dessus, un tel système présente certains inconvénients.

Pour pallier ces inconvénients, l'invention consiste à supprimer le séquenceur SQ1 centralisé et à décentraliser la gestion de la séquence d'assemblage dans plusieurs dispositifs autonomes.

En référence à la figure 2, le système comporte ainsi plusieurs dispositifs D2 identiques, connectés chacun à une ligne de communication Lc pour pouvoir communiquer entre eux et à deux lignes d'alimentation L1, L2 reliées à une source d'alimentation S. La source d'alimentation S est apte à délivrer une tension d'alimentation continue aux dispositifs. En variante de réalisation, la ligne de communication Lc pourrait être réalisée sur une ligne d'alimentation, le signal électrique de la ligne d'alimentation étant modulé pour y faire passer des données.

Dans la suite de la description et sur les figures annexées, nous prenons l'exemple d'un système comportant deux lignes d'alimentation L1, L2, l'une à un potentiel électrique de 0Vdc et l'autre à un potentiel électrique compris entre 10 et 30Vdc, et une ligne de communication distincte des deux lignes d'alimentation.

Le système comporte en outre un dispositif de commande de la source d'alimentation. Ce dispositif permet de commander la marche ou l'arrêt de la source d'alimentation et peut également permettre d'inverser la polarité de la tension fournie.

Comme représenté sur la figure 2, les dispositifs D2 sont ainsi connectés en parallèle par rapport aux lignes d'alimentation L1, L2 et à la ligne de communication Lc. Chaque dispositif D2 comporte par exemple au moins un connecteur venant se connecter sur un connecteur complémentaire relié aux lignes d'alimentation et à la ligne de communication.

Chaque dispositif D2 est par exemple associé à un bac de stockage (B1-B7) de pièces distinct. Sur la figure 2, le système comporte ainsi sept dispositifs D2 connectés en parallèle, chacun de ces dispositifs étant positionné à proximité d'un bac de stockage de pièces différent.

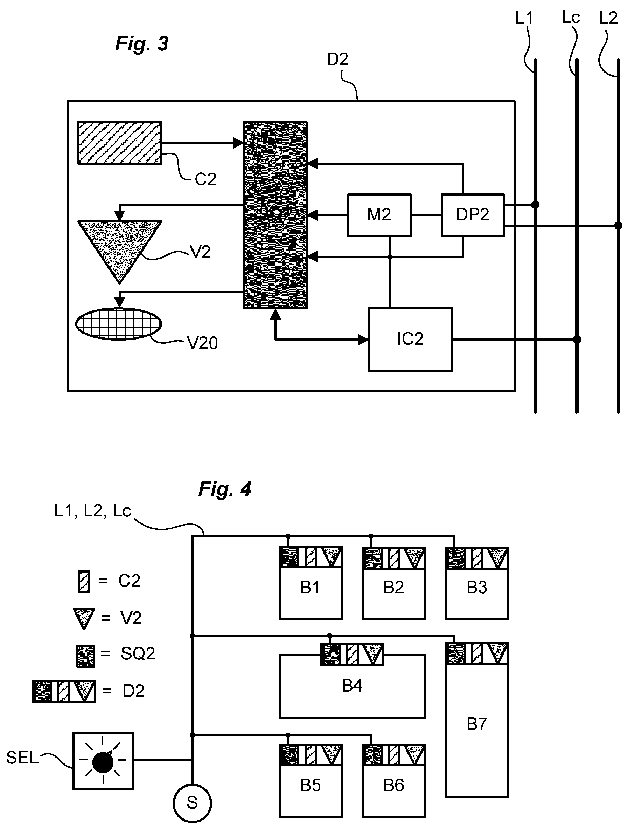

En référence à la figure 3, chaque dispositif D2 du système d'aide à l'assemblage d'un produit comporte principalement :
- un capteur de présence C2,
- un organe de signalisation V2,
- un séquenceur SQ2,
- une interface de communication IC2.

Selon l'invention, le capteur de présence C2 permet de détecter la présence de l'opérateur, par exemple sa main, lors de la saisie de la pièce dans le bac de stockage. Il peut être de différents types, par exemple optique, inductif ou ultrasonique. Toute autre technologie permettant de détecter la présence de l'opérateur pourrait être employée.

L'organe de signalisation V2 permet de signaler à l'opérateur dans quel bac de stockage il doit se saisir de la pièce pour respecter la séquence d'assemblage. L'organe de signalisation V2 peut être lumineux, réalisé sous la forme d'un voyant.

Le séquenceur SQ2 comporte pour sa part un microcontrôleur agencé pour dérouler la séquence d'assemblage du produit. De manière connue, un microcontrôleur comporte au moins un processeur et une mémoire non volatile. Le séquenceur comporte notamment un module de commande de l'organe de signalisation V2, permettant d'activer ou de désactiver l'organe de signalisation V2, et un module de réception agencé pour recevoir un signal de détection en provenance du capteur de présence C2. La mémoire non volatile d'un dispositif est organisée en tableaux de bits, un tableau de bits représentant une séquence d'assemblage d'un produit. Chaque bit correspond à un rang dans la séquence d'assemblage. Un dispositif peut mémoriser plusieurs séquences d'assemblage différentes, modélisées chacune par un tableau de bits.

L'interface de communication IC2 est agencée pour permettre au dispositif d'échanger des messages sur la ligne de communication Lc. Cette interface de communication comporte par exemple une entrée dont l'état est surveillé par le séquenceur SQ2 lors d'une lecture des données circulant sur la ligne de communication Lc et un transistor commandé par le séquenceur SQ2 lors d'une écriture de données sur la ligne de communication Lc.

Préférentiellement, le capteur de présence C2, l'organe de signalisation V2, le séquenceur SQ2 et l'interface de communication IC2 sont logés dans un même boîtier formant un ensemble monolithique. Bien entendu, d'autres configurations pourraient être envisagées. Il serait ainsi possible d'agencer les différents éléments dans plusieurs boîtiers connectés entre eux.

Préférentiellement, le dispositif D2 peut également comporter un deuxième organe de signalisation V20 permettant de signaler à l'opérateur une erreur de saisie. Ce deuxième organe de signalisation V20 est par exemple de type sonore. Ce deuxième organe de signalisation est par exemple logé dans le boîtier du dispositif. En variante de réalisation (non représentée), ce deuxième organe de signalisation est commun à tous les dispositifs D2 et connecté en parallèle des dispositifs sur la ligne de communication. Dans cette variante, en cas d'erreur de saisie, le dispositif D2 ayant détecté l'erreur génère un signal de commande sur la ligne de communication Lc, venant activer le deuxième organe de signalisation V20.

Préférentiellement, chaque dispositif D2 comporte un module M2 d'alimentation électrique permettant de gérer l'alimentation des différents composants du dispositif, notamment du séquenceur SQ2. Ce module d'alimentation est par exemple logé dans le même boîtier que les autres éléments du dispositif D2.

La séquence d'assemblage comporte plusieurs étapes successives, à chacune desquelles il est possible d'attribuer un rang d'exécution. Contrairement à l'état de la technique, la séquence d'assemblage n'est pas gérée par un seul séquenceur (SQ1 sur la figure 1) centralisé mais elle est suivie par chaque séquenceur SQ2 situé dans chaque dispositif D2. Pour chaque étape d'assemblage qui le concerne, le séquenceur SQ2 d'un dispositif active un module de marquage du rang correspondant à l'étape d'assemblage. Bien entendu, si une même pièce est utilisée à plusieurs étapes d'assemblage du produit, le séquenceur du dispositif associé au bac de stockage de cette pièce marque le rang de chacune de ces étapes d'assemblage. Le séquenceur est donc adapté pour gérer une ou plusieurs étapes d'assemblage du produit mais pas toutes les étapes d'assemblage de celui-ci. Il ne marque que chaque rang pour lequel la pièce de son bac de stockage doit être employée. Afin de pouvoir suivre la séquence d'assemblage, le séquenceur SQ2 mémorise également les rangs des autres étapes d'assemblage, sans les marquer.

Par exemple, le marquage d'un rang de la séquence d'assemblage est réalisé en lui affectant un 1, un rang restant à la valeur 0 s'il n'est pas marqué. Toute autre solution pourrait bien entendu être envisagée.

Avantageusement, la séquence d'assemblage est apprise par les dispositifs lors d'une phase d'apprentissage. En variante de réalisation, la séquence d'assemblage pourrait également être chargée dans chaque dispositif via la ligne de communication en employant un dispositif externe.

Préférentiellement, chaque dispositif D2 comporte des moyens de détection du passage en phase d'apprentissage.

Les moyens de détection comportent par exemple un détecteur de polarité DP2 permettant de détecter la polarité entre les deux lignes d'alimentation L1, L2. Préférentiellement, ce détecteur de polarité DP2 est logé dans le boîtier du dispositif D2. Il se compose par exemple d'un pont de diodes connecté d'une part aux deux lignes d'alimentation L1, L2 et d'autre part au séquenceur SQ2, via le module d'alimentation. Le passage en phase d'apprentissage est par exemple réalisé en alimentant le système avec une tension négative détectée par chaque dispositif grâce à son détecteur de polarité DP2.

Selon l'invention, la phase d'apprentissage se déroule ainsi de la manière suivante :
- A l'aide du dispositif de commande de la source d'alimentation S, l'opérateur alimente le système avec une tension continue de polarité négative.
- Par l'intermédiaire du détecteur de polarité DP2, le séquenceur SQ2 de chaque dispositif D2 détecte l'inversion de polarité et active alors un module d'apprentissage.
- Dans chaque dispositif, le module d'apprentissage active temporairement le module de commande de l'organe de signalisation V2 à la fermeture pour indiquer à l'opérateur que la phase d'apprentissage peut débuter.
- L'opérateur saisit alors la première pièce dans un bac de stockage B1-B7. Dans le dispositif concerné par ce bac de stockage, le capteur de présence C2 détecte la main de l'opérateur et envoie un signal de détection au séquenceur SQ2. A la réception de ce signal, le séquenceur SQ2 active temporairement le module de commande de l'organe de signalisation V2 à la fermeture pour indiquer à l'opérateur que la saisie a bien été prise en compte.
- Le séquenceur SQ2 active le module de marquage du rang de cette étape d'assemblage dans la séquence d'assemblage.
- Par l'intermédiaire de l'interface de communication, le séquenceur SQ2 envoie un message sur la ligne de communication à destination des autres dispositifs D2 du système en vue de leur indiquer qu'ils ne sont pas concernés par cette étape d'assemblage.
- A la réception du message, les séquenceurs SQ2 des autres dispositifs du système activent leur module de mémorisation du rang de l'étape d'assemblage, sans la marquer.

Pour la deuxième étape d'assemblage et toutes les étapes suivantes jusqu'à la fin de l'assemblage du produit, le déroulement de l'apprentissage est identique à celui décrit ci-dessus. Bien entendu, l'opérateur peut saisir plusieurs fois une même pièce. Le dispositif D2 concerné marque alors plusieurs rangs dans la séquence d'assemblage mémorisée.

A la fin de la phase d'apprentissage, chaque dispositif D2 stocke dans sa mémoire tous les rangs de la séquence d'assemblage, un ou plusieurs rangs étant marqués selon que le dispositif est concerné ou non par l'étape d'assemblage. Lors de la phase d'apprentissage, à chaque nouvelle saisie, les séquenceurs SQ2 des dispositifs incrémentent par exemple un compteur du nombre de pièces à assembler. La fin de la phase d'apprentissage est par exemple réalisée en coupant l'alimentation.

Une fois que la phase d'apprentissage est terminée, la lecture de la séquence d'assemblage peut avoir lieu. Celle-ci se déroule de la manière suivante :
- A l'aide du dispositif de commande de la source d'alimentation S, l'opérateur alimente le système avec une tension positive.
- Par l'intermédiaire du détecteur de polarité DP2, le séquenceur SQ2 de chaque dispositif D2 détecte cette polarité et active alors un module de lecture de sa mémoire non volatile. Le séquenceur SQ2, dont le rang 1 de la séquence d'assemblage est marqué, active alors le module de commande de l'organe de signalisation V2 en vue d'indiquer à l'opérateur le bac de stockage dans lequel se situe la première pièce à saisir.
- Les autres dispositifs D2, non concernés par la première étape d'assemblage, lisent en permanence la ligne de communication Lc pour détecter le passage à l'étape d'assemblage suivante.
- L'opérateur saisit la première pièce dans le bac de stockage correspondant à l'organe de signalisation V2 allumé. Le capteur de présence C2 détecte la prise de pièce dans le bac de stockage et envoie un signal de détection au séquenceur SQ2.
- A la réception du signal de détection, le séquenceur SQ2 désactive le module de commande de l'organe de signalisation V2. Ensuite, par l'intermédiaire de l'interface de communication IC2, le séquenceur envoie un message sur la ligne de communication Lc afin d'avertir les autres dispositifs D2 que l'étape d'assemblage de rang 1 est terminée.
- A la lecture du message, les séquenceurs SQ2 des dispositifs activent alors leur module de lecture de leur mémoire. Le dispositif dont le rang 2 est marqué devient alors actif.

Le processus décrit ci-dessus se déroule ainsi jusqu'à la dernière étape d'assemblage. A chaque saisie d'une pièce, les dispositifs décrémentent leur compteur. Lorsqu'il est à zéro, la séquence d'assemblage est terminée. Avantageusement, à la fin de la séquence d'assemblage, tous les dispositifs D2 activent leur module de commande de l'organe de signalisation V2 en vue d'indiquer à l'opérateur la fin de la séquence d'assemblage et s'initialisent pour rejouer la séquence d'assemblage. Le compteur est remis à la valeur apprise à l'issue de la phase d'apprentissage.

Comme représenté sur la figure 4, le système de l'invention peut avantageusement comporter un sélecteur SEL permettant de sélectionner une séquence d'assemblage parmi plusieurs séquences d'assemblage mémorisées dans les dispositifs. Ce sélecteur SEL est connecté à la ligne de communication Lc. Le sélecteur SEL comporte par exemple une roue codeuse, un bouton rotatif ou un ensemble formé d'un bouton et d'un afficheur. Il pourrait également comporter un lecteur de code à barres ou un lecteur RFID. Le sélecteur SEL génère un code représentatif du numéro de la séquence d'assemblage à débuter et l'envoie sur la ligne de communication Lc à destination des dispositifs D2. Lors de la phase d'apprentissage, une phase préalable à la mémorisation de la séquence d'assemblage consiste à mémoriser le numéro de la séquence qui va être apprise. Chaque dispositif D2 peut mémoriser plusieurs séquences d'assemblage dans sa mémoire non volatile. Cette particularité permet d'offrir une grande flexibilité à l'opérateur, qui peut alors facilement passer à l'assemblage d'un autre produit, juste en sélectionnant le numéro de la séquence d'assemblage attribué à ce produit.

Selon l'invention, le deuxième organe de signalisation V20 centralisé qui permet de signaler une erreur de saisie est par exemple logé dans un même boîtier que le sélecteur SEL. Un dispositif de détection du début et/ou de la fin de la séquence d'assemblage et/ou le dispositif de commande de la source d'alimentation peuvent également être logés dans ce boîtier. D'autres fonctionnalités centralisées pourraient également y être ajoutées.

L'invention décrite présente donc de nombreux avantages. Elle offre une grande flexibilité à l'opérateur et une facilité de mise en oeuvre. L'opérateur n'a nul besoin d'être particulièrement qualifié pour générer une séquence d'assemblage. De plus, le système s'adapte automatiquement au nombre de dispositifs employés et si un dispositif tombe en panne, il est très facile de le remplacer.

## Revendications

1. Dispositif (D2) employé dans un système d'aide à l'assemblage d'un produit, ledit assemblage étant réalisé en suivant au moins une séquence d'assemblage, une séquence d'assemblage comportant plusieurs étapes d'assemblage successives classées par rangs d'exécution, ledit dispositif comprenant :
- un capteur de présence (C2),
- au moins un organe de signalisation (V2),
- un séquenceur (SQ2) connecté au capteur de présence (C2) et à l'organe de signalisation (V2), ledit séquenceur comportant un microcontrôleur agencé pour gérer ladite séquence d'assemblage,
- une interface de communication (IC2) agencée pour échanger des messages sur une ligne de communication (Lc),
le séquenceur (SQ2) comportant :
- un module de mémorisation et de marquage d'un rang d'une étape d'assemblage de la séquence d'assemblage,
- un module de commande agencé pour envoyer un signal de commande à l'organe de signalisation (V2) lorsque le rang marqué est atteint,
- un module de réception agencé pour recevoir un signal de détection en provenance du capteur de présence (C2),
- un module d'émission agencé pour envoyer un message sur la ligne de communication (Lc), représentatif de la fin de l'étape d'assemblage correspondant au rang marqué,
ledit dispositif étant **caractérisé en ce qu'**il est associé à un seul bac de stockage de pièces employées pour une ou plusieurs étapes d'assemblage du produit.

2. Dispositif selon la revendication 1, **caractérisé en ce qu'**il comporte un boîtier logeant le capteur de présence (C2), ledit au moins un organe de signalisation (V2), l'interface de communication (IC2) et le séquenceur (SQ2).

3. Dispositif selon la revendication 2, **caractérisé en ce qu'**il comporte des moyens de détection d'un passage en phase d'apprentissage.

4. Dispositif selon la revendication 3, **caractérisé en ce que** les moyens de détection comportent un détecteur de polarité (DP2) connecté au séquenceur (SQ2).

5. Dispositif selon la revendication 4, **caractérisé en ce que** le détecteur de polarité (DP2) est logé dans le boîtier.

6. Dispositif selon l'une des revendications 2 à 5, **caractérisé en ce qu'**il comporte un module (M2) d'alimentation électrique.

7. Dispositif selon la revendication 6, **caractérisé en ce que** le module (M2) d'alimentation électrique est logé dans le boîtier.

8. Dispositif selon l'une des revendications 2 à 7, **caractérisé en ce qu'**il comporte un deuxième organe de signalisation (V20) apte à signaler les erreurs de saisie.

9. Dispositif selon la revendication 8, **caractérisé en ce que** le deuxième organe de signalisation (V20) est logé dans le boîtier.

10. Système d'aide à l'assemblage d'un produit, ledit système étant **caractérisé en ce qu'**il comporte :
- un premier dispositif (D2) et au moins un deuxième dispositif (D2), conformes chacun à celui défini dans l'une des revendications 1 à 7,
- une ligne de communication (Lc), et **en ce que** :
- le premier dispositif est connecté au deuxième dispositif via la ligne de communication (Lc),
- le module de marquage du premier dispositif est agencé pour marquer un premier rang d'une première étape d'assemblage de la séquence d'assemblage et le module de marquage du deuxième dispositif est agencé pour marquer un deuxième rang d'une deuxième étape d'assemblage de la séquence d'assemblage.

11. Système selon la revendication 10, **caractérisé en ce qu'**il comporte une source d'alimentation (S) et deux lignes d'alimentation (L1, L2) connectées à ladite source d'alimentation (S), le premier dispositif et le deuxième dispositif étant connectés aux deux lignes d'alimentation (L1, L2).

12. Système selon la revendication 10 ou 11, **caractérisé en ce que** la ligne de communication (Lc) est réalisée sur une ligne d'alimentation.

13. Système selon l'une des revendications 10 à 12, **caractérisé en ce qu'**il comporte un sélecteur (SEL) permettant de sélectionner une séquence d'assemblage parmi plusieurs séquences d'assemblage mémorisées dans le premier dispositif et le deuxième dispositif.

14. Système selon l'une des revendications 10 à 13, **caractérisé en ce qu'**il comporte un deuxième organe de signalisation (V20) apte à signaler les erreurs de saisie, ce deuxième organe de signalisation (V20) étant connecté à la ligne de communication (Lc).

## Patentansprüche

1. Vorrichtung (D2), die in einem Hilfesystem für den Zusammenbau eines Produkts verwendet wird, wobei der Zusammenbau durchgeführt wird, indem mindestens eine Zusammenbaufolge verfolgt wird, wobei eine Zusammenbaufolge mehrere aufeinanderfolgende Zusammenbauschritte aufweist, die gemäß Ausführungsrängen eingestuft sind, wobei die Vorrichtung enthält:
- einen Anwesenheitssensor (C2),
- mindestens ein Signalisierungsorgan (V2),
- eine Ablaufsteuerung (SQ2), die mit dem Anwesenheitssensor (C2) und dem Signalisierungsorgan (V2) verbunden ist, wobei die Ablaufsteuerung einen Mikrokontroller aufweist, der eingerichtet ist, um die Zusammenbaufolge zu verwalten,
- eine Kommunikationsschnittstelle (IC2), die eingerichtet ist, um Mitteilungen auf einer Kommunikationsleitung (Lc) auszutauschen,
wobei die Ablaufsteuerung (SQ2) aufweist:
- ein Speicher- und Markiermodul eines Rangs eines Zusammenbauschritts der Zusammenbaufolge,
- ein Steuermodul, das eingerichtet ist, um ein Steuersignal an das Signalisierungsorgan (V2) zu schicken, wenn der markierte Rang erreicht wird,
- ein Empfangsmodul, das eingerichtet ist, um ein Erfassungssignal vom Anwesenheitssensor (C2) zu empfangen,
- ein Sendemodul, das eingerichtet ist, um eine Mitteilung auf der Kommunikationsleitung (Lc) zu senden, die für das Ende des dem markierten Rang entsprechenden Zusammenbauschritts repräsentativ ist,
wobei die Vorrichtung **dadurch gekennzeichnet ist, dass** sie einem einzigen Lagerbehälter für Bauteile zugeordnet ist, die für einen oder mehrere Zusammenbauschritte des Produkts verwendet werden.

2. Vorrichtung nach Anspruch 1, **dadurch gekennzeichnet, dass** sie ein Gehäuse aufweist, in dem der Anwesenheitssensor (C2), das mindestens eine Signalisierungsorgan (V2), die Kommunikationsschnittstelle (IC2) und die Ablaufsteuerung (SQ2) untergebracht sind.

3. Vorrichtung nach Anspruch 2, **dadurch gekennzeichnet, dass** sie Einrichtungen zur Erfassung eines Übergangs in eine Lernphase aufweist.

4. Vorrichtung nach Anspruch 3, **dadurch gekennzeichnet, dass** die Erfassungseinrichtungen einen mit der Ablaufsteuerung (SQ2) verbundenen Polaritätsdetektor (DP2) aufweisen.

5. Vorrichtung nach Anspruch 4, **dadurch gekennzeichnet, dass** der Polaritätsdetektor (DP2) im Gehäuse untergebracht ist.

6. Vorrichtung nach einem der Ansprüche 2 bis 5, **dadurch gekennzeichnet, dass** sie ein Stromversorgungsmodul (M2) aufweist.

7. Vorrichtung nach Anspruch 6, **dadurch gekennzeichnet, dass** das Stromversorgungsmodul (M2) im Gehäuse untergebracht ist.

8. Vorrichtung nach einem der Ansprüche 2 bis 7, **dadurch gekennzeichnet, dass** sie ein zweites Signalisierungsorgan (V20) aufweist, das die Ergreifungsfehler anzeigen kann.

9. Vorrichtung nach Anspruch 8, **dadurch gekennzeichnet, dass** das zweite Signalisierungsorgan (V20) im Gehäuse untergebracht ist.

10. Hilfesystem für den Zusammenbau eines Produkts, wobei das System **dadurch gekennzeichnet ist, dass** es aufweist:
- eine erste Vorrichtung (D2) und mindestens eine zweite Vorrichtung (D2), die je derjenigen entsprechen, die in einem der Ansprüche 1 bis 7 definiert ist,
- eine Kommunikationsleitung (Lc),
und dass:
- die erste Vorrichtung mit der zweiten Vorrichtung über die Kommunikationsleitung (Lc) verbunden ist,
- wobei das Markiermodul der ersten Vorrichtung eingerichtet ist, um einen ersten Rang eines ersten Zusammenbauschritts der Zusammenbaufolge zu markieren, und das Markiermodul der zweiten Vorrichtung eingerichtet ist, um einen zweiten Rang eines zweiten Zusammenbauschritts der Zusammenbaufolge zu markieren.

11. System nach Anspruch 10, **dadurch gekennzeichnet, dass** es eine Versorgungsquelle (S) und zwei Versorgungsleitungen (L1, L2) aufweist, die mit der Versorgungsquelle (S) verbunden sind, wobei die erste Vorrichtung und die zweite Vorrichtung mit den zwei Versorgungsleitungen (L1, L2) verbunden sind.

12. System nach Anspruch 10 oder 11, **dadurch gekennzeichnet, dass** die Kommunikationsleitung (Lc) in einer Versorgungsleitung hergestellt wird.

13. System nach einem der Ansprüche 10 bis 12, **dadurch gekennzeichnet, dass** es einen Wählschalter (SEL) aufweist, der es ermöglicht, eine Zusammenbaufolge unter mehreren Zusammenbaufolgen auszuwählen, die in der ersten Vorrichtung und der zweiten Vorrichtung gespeichert sind.

14. System nach einem der Ansprüche 10 bis 13, **dadurch gekennzeichnet, dass** es ein zweites Signalisierungsorgan (V20) aufweist, das die Eingreifungsfehler anzeigen kann, wobei dieses zweite Signalisierungsorgan (V20) mit der Kommunikationsleitung (Lc) verbunden ist.

## Claims

1. Device (D2) employed in a system for facilitating the assembly of a product, said assembly being carried out by following at least one assembly sequence, an assembly sequence comprising several successive assembly steps graded by execution ranks, said device comprising:
- a presence sensor (C2),
- at least one signalling member (V2),
- a sequencer (SQ2) connected to the presence sensor (C2) and to the signalling member (V2), said sequencer comprising a microcontroller designed to manage said assembly sequence,
- a communication interface (IC2) designed to exchange messages on a communication line (Lc),
the sequencer (SQ2) comprising:
- a module for storing and marking a rank of an assembly step of the assembly sequence,
- a control module designed to dispatch a control signal to the signalling member (V2) when the marked rank is reached,
- a reception module designed to receive a detection signal originating from the presence sensor (C2),
- an emission module designed to dispatch a message on the communication line (Lc), representative of the end of the assembly step corresponding to the marked rank,
said devise being **characterized in that** it is associated with a single parts storage bin employed for one or more assembly steps for the product.

2. Device according to Claim 1, **characterized in that** it comprises a casing housing the presence sensor (C2), said at least one signalling member (V2), the communication interface (IC2) and the sequencer (SQ2).

3. Device according to Claim 2, **characterized in that** it comprises means for detecting passage to a learning phase.

4. Device according to Claim 3, **characterized in that** the detection means comprise a polarity detector (DP2) connected to the sequencer (SQ2).

5. Device according to Claim 4, **characterized in that** the polarity detector (DP2) is housed in the casing.

6. Device according to one of Claims 2 to 5, **characterized in that** it comprises an electrical power supply module (M2).

7. Device according to Claim 6, **characterized in that** the electrical power supply module (M2) is housed in the casing.

8. Device according to one of Claims 2 to 7, **characterized in that** it comprises a second signalling member (V20) able to signal pick-up errors.

9. Device according to Claim 8, **characterized in that** the second signalling member (V20) is housed in the casing.

10. System for facilitating the assembly of a product, said system being **characterized in that** it comprises:
- a first device (D2) and at least one second device (D2), each in accordance with that defined in one of Claims 1 to 7,
- a communication line (Lc),
- the first device being connected to the second device via the communication line (Lc),
- the marking module for the first device being designed to mark a first rank of a first assembly step of the assembly sequence and the marking module for the second device being designed to mark a second rank of a second assembly step of the assembly sequence.

11. System according to Claim 10, **characterized in that** it comprises a power supply source (S) and two power supply lines (L1, L2) connected to said power supply source (S), the first device and the second device being connected to the two power supply lines (L1, L2).

12. System according to Claim 10 or 11, **characterized in that** the communication line (Lc) is embodied on a power supply line.

13. System according to one of Claims 10 to 12, **characterized in that** it comprises a selector (SEL) making it possible to select an assembly sequence from among several assembly sequences stored in the first device and the second device.

14. System according to one of Claims 10 to 13, **characterized in that** it comprises a second signalling member (V20) able to signal pick-up errors, this second signalling member (V20) being connected to the communication line (Lc).
